# EUROPÄISCHE PATENTSCHRIFT

(11) **EP 3 927 668 B1**
(45) Veröffentlichungstag und Bekanntmachung des Hinweises auf die Patenterteilung: **17.07.2024**
(21) Anmeldenummer: 20706478.3
(22) Anmeldetag: 20.02.2020
(51) Int. Cl.: C02F 11/123, F26B 3/20, F26B 3/22, F26B 17/00, F26B 17/16, F26B 25/00

(54) **VORRICHTUNG ZUM TROCKNEN VON BIOMASSE UND KOMPAKTANLAGE ZUM TROCKNEN VON BIOMASSE**
DEVICE FOR DRYING BIOMASS AND COMPACT SYSTEM FOR DRYING BIOMASS
DISPOSITIF DE SÉCHAGE DE BIOMASSE ET SYSTÈME COMPACT DE SÉCHAGE DE BIOMASSE

(30) Priorität: 22.02.2019 DE 202019101032 U; 19.06.2019 DE 102019116658
(43) Veröffentlichungstag der Anmeldung: 29.12.2021
(73) Patentinhaber: Boehm Dryrun GmbH, 98544 Zella-Mehlis (DE)
(72) Erfinder: HELLMUTH, Felix, 96450 Coburg (DE); KAUS, Stefan, 71126 Gäufelden (DE)
(74) Vertreter: 2s-ip Schramm Schneider Bertagnoll Patent- und Rechtsanwälte Part mbB
(86) Internationale Anmeldenummer: PCT/EP2020/054527
(87) Internationale Veröffentlichungsnummer: WO 2020/169759

(56) Entgegenhaltungen:
- CN-U- 203 704 598
- DE-A1- 102012 020 044
- US-A- 1 515 596
- US-A- 2 756 554

## Beschreibung

Die Erfindung betrifft eine Vorrichtung zum Trocknen von Material, insbesondere zum Trocknen von befeuchteter oder Feuchtigkeit enthaltender Masse oder Schlamm oder von befeuchteten oder Feuchtigkeit enthaltenden Teilen 5 oder Granulaten, wie etwa Metallspänen oder Hackschnitzel. Die Erfindung betrifft insbesondere eine Vorrichtung zum Trocknen von Biomasse, wie etwa Klärschlamm, Milchschlamm, Biertreber, Gärresten, Gülle, Tiergülle oder Biogasgülle. Die Erfindung betrifft ferner eine Kompaktanlage mit mehreren solcher Vorrichtungen zum Trocknen.

Zur Trocknung von Klärschlamm ist es bekannt, diesen in einer Ebene auf einer Trocknungsfläche möglichst gleichmäßig zu verteilen und anschließend insbesondere unter dem Einfluss von Sonnenstrahlung zu trocknen. Hierbei kann es sich insbesondere als hilfreich erweisen, die schichtartig auf die Trocknungsfläche aufgebrachte Biomasse während des Trocknungsvorgangs ein oder mehrmals zu wenden. Der Trocknungsvorgang erfolgt typischerweise in hierzu geeigneten Gebäuden, die insbesondere hallenartig oder nach Art von Gewächshäusern ausgebildet und entsprechend groß dimensioniert sind. Die Trocknungsfläche bei bekannten Anlagen können insbesondere Längen von mehr als 100 Meter aufweisen.

Aus dem Stand der Technik sind verschiedene Vorrichtungen bekannt, die dazu ausgebildet sind, Biomasse, insbesondere Klärschlamm, in einer Ebene auf einer Trocknungsfläche auszubringen. DE 103 11 554 B4 beschreibt beispielsweise eine Vorrichtung mit einem Kratzenförderer, dessen Kratzer in definiertem Abstand zur Trocknungsfläche geführt werden, um Klärschlamm auf dieser zu verteilen. Zur Unterstützung des Trocknungsvorgangs unter Einfluss von Sonnenstrahlung kann die Trocknungsfläche zusätzlich beheizbar sein.

Aus der US 1,515,596 A ist eine Trocknungsvorrichtung bekannt, die mehrere übereinander angeordnete Trocknungsflächen aufweist, auf denen das zu trocknende Material ausbringbar ist. Den Trocknungsflächen sind Zugmittel zugeordnet, an denen Förderelemente angeordnet sind. Mit den Förderelementen kann das zu trocknende Material auf den Trocknungsflächen ausgebracht werden.

Aus der CN 203704598 U ist eine Trocknungsvorrichtung bekannt, die einen Flachplattentrockner umfasst. In dem Flachplattentrockner sind übereinander angeordnete Trocknungsböden angeordnet, wobei jeweils zwei Trocknungsböden ein umlaufender Bandförderer zugeordnet ist, mit dem ein zu trocknendes Material auf die Trocknungsböden ausbringbar ist. Der Bandförderer weist Förderelemente auf.

Aus der DE 10 2012 020 044 A1 ist eine Vorrichtung zum Trocknen von Biomasse bekannt. Die Vorrichtung weist eine Trockenfläche auf, auf die Biomasse zum Trocknen ausbringbar ist. Der Trockenfläche ist eine Fördereinrichtung zugeordnet, mit der die Biomasse auf der Trockenfläche gefördert und/oder gewendet werden kann. Die Fördereinrichtung weist Förderbalken auf, auf denen zu der Trockenfläche weisende Zinken angeordnet sind.

Der Erfindung liegt die Aufgabe zugrunde, eine neue Vorrichtung zum Trocknen, insbesondere von Biomasse, beispielsweise von Klärschlamm, anzugeben, welche sich insbesondere zur Installation in Kompaktanlagen mit relativ begrenztem Bauraum eignet.

Hinsichtlich der Vorrichtung wird diese Aufgabe gelöst durch die Merkmale des Anspruchs 1.

Hinsichtlich der Kompaktanlage wird diese Aufgabe gelöst durch die Merkmale des Anspruchs 11.

Vorteilhafte Ausgestaltungen und Weiterbildungen sind in den abhängigen Ansprüchen angegeben.

Die erfindungsgemäße Vorrichtung zum Trocken ist insbesondere zum Trocknen von Materialien wie beispielsweise befeuchteter oder Feuchtigkeit enthaltender Masse oder Schlamm oder befeuchteten oder Feuchtigkeit enthaltenden Teilen oder Granulaten, wie etwa Metallspänen oder Hackschnitzeln, oder Biomasse, wie etwa Klärschlamm, Milchschlamm, Biertreber, Gärresten, Gülle, Tiergülle oder Biogasgülle ausgebildet. Die erfindungsgemäße Vorrichtung zum Trocken umfasst zumindest eine obere und eine untere Trocknungsfläche (auch: Trockenfläche, Trocknungsebene), die in vertikaler Richtung voneinander beabstandet sind. Auf der oberen und der unteren Trocknungsfläche ist das Feuchtigkeit enthaltende Material, insbesondere Biomasse, zum Trocknen flächig ausbringbar. Zum Ausbringen des zu trocknenden Materials, insbesondere der zu trocknenden Biomasse, auf die obere und die untere Trocknungsfläche sind von zumindest einem Zugmittel bewegbare oder bewegte Förderelemente vorgesehen, wobei das oder die Zugmittel umlaufend um die obere Trocknungsfläche angeordnet ist bzw. sind.

Der Erfindung liegt die Erkenntnis zugrunde, dass von Zugmitteln bewegbare bzw. bewegte Förderelemente prinzipiell dazu verwendet werden können, zu trocknendes Material, insbesondere zu trocknende Biomasse, auf zwei vertikal zueinander beabstandete Trocknungsflächen auszubringen, wenn das Zugmittel die obere Trocknungsfläche umläuft. Die Trocknungsflächen können hierbei insbesondere zwei übereinander angeordnete, horizontale Ebenen bilden. Die am Zugmittel mittelbar befestigten Förderelemente bewegen sich über die Trocknungsflächen, so dass auf diesen Trocknungsflächen Material, insbesondere Biomasse verteilt und gegebenenfalls gewendet werden kann. Die Förderelemente sind entsprechend dazu ausgebildet, in Richtung der oberen und/oder unteren Trocknungsfläche zu wirken. Dies kann beispielsweise durch eine geeignete strukturelle Ausbildung und/oder Ausrichtung der Förderelemente erfolgen.

Die Förderelemente sind als Wendehaken ausgebildet. In Ausgestaltungen, in denen die Förderelemente mittelbar am Zugmittel starr befestigt sind (die Formulierung "starr" erlaubt ein Spiel der Förderelemente, insbesondere ein vertikales Spiel zum Ausgleich von Unebenheiten auf der zugeordneten Trocknungsfläche), sind beispielsweise Förderelemente vorgesehen, die bezüglich der vertikalen Richtung unterschiedlich ausgerichtet sind, so dass diese beim Umlauf um die obere Trocknungsfläche jeweils auf die bezüglich der bewegten Förderelemente unterhalb gelegene (obere und untere) Trocknungsfläche wirken. Alternativ oder zusätzlich können auch Förderelemente vorgesehen sein, die strukturell so ausgebildet sind, dass diese stets nach oben und nach unten wirken. Das Förderelement kann beispielsweise hierzu eine Struktur aufweisen, die sich beidseitig von der Umlaufkontur oder -ebene, die von dem umlaufenden Zugmittel oder den umlaufenden Zugmitteln definiert wird, erstreckt. Dies kann insbesondere durch eine bezüglich des Zugmittels symmetrische strukturelle Ausbildung des Förderelements realisiert sein. Solche Förderelemente sind somit strukturell so ausgebildet, dass diese beim Umlauf um die obere Trocknungsfläche zumindest auf die bezüglich der bewegten Förderelemente jeweils unterhalb gelegene (obere oder untere) Trocknungsfläche wirken.

Alternativ oder zusätzlich können Förderelemente vorgesehen sein, die nicht starr oder steif mit dem Zugelement verbunden sind, sondern am Zugmittel mittelbar flexibel, beispielsweise über ein Gelenk, befestigt sind, so dass diese Förderelemente beim Umlauf um die obere Trocknungsfläche stets auf die bezüglich der bewegten Förderelemente unterhalb gelegene (obere und untere) Trocknungsebene wirken. Die Ausrichtung der insbesondere mit dem zumindest einen Zugmittel gelenkig verbundenen Förderelemente kann beispielsweise unter Einwirkung der Schwerkraft erfolgen, so dass die Förderelemente hinsichtlich ihrer Ausrichtung bezüglich der Hochachse, also in vertikaler Richtung, beim Umlauf um die obere Trocknungsfläche umklappen.

Unter der Formulierung, dass die Förderelemente auf oder in Richtung der Trocknungsfläche wirken, soll insbesondere jeder mechanische Eingriff zu verstehen sein, der dazu geeignet ist, das zu trocknende Material, insbesondere die zu trocknende Biomasse, auf der jeweiligen Trocknungsfläche zu verteilen und/oder gegebenenfalls auf der jeweiligen Trocknungsfläche zu durchmischen.

Begriffe wie "oben", "unten", "vertikal" oder "horizontal" sollen im Rahmen dieser Spezifikation im herkömmlichen Sinne mit Bezug auf das Schwerefeld der Erde verstanden werden. Die obere und untere Trocknungsfläche sind in diesem Sinne zumindest abschnittsweise übereinander angeordnet. In Ausgestaltungen erstrecken sich die obere und die untere Trocknungsfläche im Wesentlichen über zueinander in vertikaler Richtung beabstandete horizontale Ebenen, die nicht notwendiger Weise gleiche Ausdehnungen aufweisen und zueinander versetzt angeordnet sein können. In anderen Ausgestaltungen können die obere und/oder untere Trocknungsfläche bezüglich einer horizontalen Ebene beispielsweise leicht geneigt angeordnet sein.

Unter einer mittelbaren Befestigung der Förderelemente am Zugmittel soll insbesondere eine Befestigung verstanden werden, bei der zwischen dem Zugmittel und den Förderelementen ein Querträger, der mehrere Förderelemente trägt, angeordnet ist. Ein derartiger Querträger mit mehreren Förderelementen kann beispielsweise als Mitnehmerrechen ausgebildet sein, bei den Förderelementen handelt es sich um Wendehaken.

Die Umlaufkontur bzw. die Umlaufebene soll insbesondere diejenige umlaufende Kontur bzw. diejenige umlaufende Fläche bezeichnen, entlang der sich das zumindest eine Zugmittel bzw. die vorgesehenen Zugmittel im Förderbetrieb bewegt bzw. bewegen.

Die (obere und/oder untere) Trocknungsflächen sind in vorteilhaften Ausführungen durch Platten aus Metall, insbesondere aus Edelstahl realisiert.

Die Förderelemente sind als Wendehaken ausgebildet, die zueinander bezüglich einer vom zumindest einen Zugmittel vorgegebenen Förderrichtung beabstandet angeordnet sind. Die zueinander in Förderrichtung beabstandeten Wendehaken können insbesondere in vorteilhaften Ausgestaltungen zueinander regelmäßig beabstandet sein. Jeder Wendehaken weist zumindest einen Wendeabschnitt zum Eindringen in das auf die Trocknungsflächen auszubringende bzw. ausgebrachte Material, insbesondere die Biomasse, auf. Die Wendeabschnitte, die zum Verteilen und /oder Durchmischen des Materials, insbesondere der Biomasse, auf der oberen Trocknungsfläche vorgesehen sind, sind bezüglich der vertikalen Richtung bzw. bezüglich der Umlaufebene (oder Umlaufkontur) entgegengesetzt zu den Wendeabschnitten angeordnet, die zum Verteilen und/oder Durchmischen des Materials, insbesondere der Biomasse, auf der unteren Trocknungsfläche vorgesehen sind. Mit anderen Worten können Wendehaken vorgesehen sein, die dazu ausgebildet und ausgerichtet sind, auf oder in Richtung der oberen Trocknungsfläche zu wirken.

Entsprechend können Wendehaken vorgesehen sein, die dazu ausgebildet und ausgerichtet sind, auf oder in Richtung der unteren Trocknungsfläche zu wirken. Die Wendehaken können in Ausgestaltungen insbesondere nach Art von Doppelhaken ausgebildet sein und somit sowohl erste als auch zweite Wendeabschnitte aufweisen, die sich insbesondere beidseitig von der Umlaufkontur oder -ebene, die von dem umlaufenden Zugmittel oder den umlaufenden Zugmitteln definiert wird, in entgegengesetzten Richtungen erstrecken. Derartige Wendehaken wirken somit bei der Umlaufbewegung sowohl auf oder in Richtung der oberen und der unteren Trocknungsfläche.

In Ausgestaltungen sind in Förderrichtung benachbart angeordnete Wendehaken jeweils alternierend mit ihren Wendeabschnitten bezüglich der vertikalen Richtung und/oder bezüglich der Umlaufebene angeordnet. Mit anderen Worten sind die Wendehaken, die in Förderrichtung benachbart angeordnet sind, hinsichtlich ihrer Ausrichtung bezüglich der vertikalen Richtung (bzw. bezüglich der Umlaufkontur oder Umlaufebene) alternierend angeordnet bzw. ausgerichtet. Die Wendehaken, die in Förderrichtung benachbart angeordnet sind, können insbesondere hinsichtlich der Umlaufkontur oder - ebene, die von dem umlaufenden Zugmittel oder den umlaufenden Zugmitteln definiert wird, jeweils um 180° rotiert oder hierzu spiegelsymmetrisch angeordnet sein. Auf diese Weise wird erreicht, dass die Wendehaken, welche zum Einwirken auf die obere Trocknungsfläche vorgesehen sind, und diejenigen Wendehaken, welche zum Einwirken auf die untere Trocknungsfläche vorgesehen sind, entlang der Förderrichtung bzw. entlang der Umlaufebene zumindest näherungsweise gleichmäßig verteilt angeordnet sind. Dies kann insbesondere einen im Wesentlichen gleichmäßigen Förderbetrieb sicherstellen.

Der zumindest eine Wendeabschnitt ist gekrümmt ausgebildet. Der zumindest eine Wendeabschnitt kann insbesondere die Form eines gestreckten C oder eines gestreckten S aufweisen. Die gekrümmte Form des zumindest einen Wendeabschnitts dient insbesondere dazu, bereits auf der oberen und/oder unteren Trocknungsfläche aufgebrachtes Material, insbesondere Biomasse, zu durchmischen bzw. zu wenden, um den Trocknungsprozess zu begünstigen.

Zumindest einige der Wendehaken sind mittelbar über Träger an dem zumindest einen Zugmittel befestigt. Die Wendehaken sind von dem Zugmittel in Förderrichtung bewegbar, wobei sich die Träger quer zur Förderrichtung erstrecken und an jedem Träger mehrere Wendehaken befestigt sind. In vorteilhaften Ausgestaltungen ist insbesondere vorgesehen, die Träger aus Gründen der mechanischen Stabilität an mehreren Zugmitteln aufzuhängen bzw. zu befestigen. Jeder Träger ist dazu ausgebildet, mehrere Wendehaken zu tragen, die zueinander in lateraler Richtung quer zur Förderrichtung beabstandet sind. Die zueinander in lateraler Richtung quer zur Förderrichtung beabstandeten Wendehaken können insbesondere zueinander regelmäßig beabstandet sein. Durch die Dimensionierung der Träger und eine entsprechende Anpassung der Anzahl der Wendehaken, die jeder Träger trägt, können insbesondere Vorrichtungen angegeben werden, die dazu ausgebildet sind, Material, insbesondere Masse, insbesondere Biomasse, auf Trocknungsflächen unterschiedlicher Breite gleichmäßig auszubringen.

Als Länge der (oberen und/oder unteren) Trocknungsfläche soll insbesondere die Ausdehnung der Trocknungsfläche längs bzw. parallel zur Förderrichtung verstanden werden. Als Breite der (oberen und/oder unteren) Trocknungsfläche soll insbesondere die Ausdehnung der Trocknungsfläche quer bzw. senkrecht zur Förderrichtung verstanden werden.

In Ausgestaltungen trägt zumindest einer der Träger mehrere Wendehaken. Dabei sind die Wendehaken, welche an dem zumindest einen Träger befestigt und quer zur Förderrichtung benachbart angeordnet sind, mit Wendeabschnitten versehen, die bezüglich der vertikalen Richtung und/oder bezüglich der Umlaufebene jeweils alternierend angeordnet sind. Mit anderen Worten sind die Wendehaken, die längs des zumindest einen Trägers benachbart angeordnet sind, hinsichtlich ihrer Ausrichtung bezüglich der vertikalen Richtung bzw. der Umlaufebene alternierend angeordnet bzw. ausgerichtet. Die Wendehaken, die längs des zumindest einen Trägers benachbart angeordnet sind, können, insbesondere bezüglich des zumindest einen Trägers, jeweils um 180° rotiert oder hierzu spiegelsymmetrisch angeordnet sein. Auf diese Weise wird erreicht, dass die Wendehaken, welche zum Einwirken auf die obere Trocknungsfläche an dem zumindest einen Träger vorgesehen sind, und diejenigen Wendehaken, welche zum Einwirken auf die untere Trocknungsfläche an dem zumindest einen Träger vorgesehen sind, längs des zumindest einen Trägers zumindest näherungsweise gleichmäßig verteilt angeordnet sind. Dies kann insbesondere einen im Wesentlichen gleichmäßigen Förderbetrieb sicherstellen.

In Ausgestaltungen weist zumindest einer der Träger ein Hohlprofil auf, welches insbesondere aus einem Metall, einem Leichtmetall, einer Metalllegierung oder einer Leichtmetalllegierung besteht. Die Ausbildung des Trägers als Hohlprofil ermöglicht in vorteilhafter Weise eine Gewichtreduktion. In konkreten Ausführungsbeispielen kann das Hohlprofil beispielsweise aus Stahl, Aluminium oder einer Aluminiumlegierung bestehen.

Die Wendehaken, die zumindest einer der Träger trägt, sind an diesem drehfest befestigt. Auf diese Weise wird eine Rotation der Wendehaken um ihre Achsen während des Förderbetriebs unterbunden, so dass insbesondere eine gute Durchmischung des bereits schichtartig auf der oberen und/oder unteren Trocknungsfläche aufgebrachten Materials, insbesondere der Masse, insbesondere Biomasse, sichergestellt werden kann.

In Ausgestaltungen sind zur drehfesten Befestigung der Wendehaken diese mit einer nicht-rotationssymmetrischen Querschnittsfläche versehen, die in dazu komplementär ausgebildeten Ausnehmungen im Träger aufgenommen sind. Eine derartig ausgebildete drehfeste Verbindung ist insbesondere hinsichtlich Verschmutzungen durch Materialien wie Biomasse, beispielsweise Klärschlamm, robust und kann daher die drehfeste Verankerung der Wendehaken auch über längere Einsatzdauern sicherstellen.

In Ausgestaltungen ist zumindest einer der Wendehaken als Doppelhaken dergestalt ausgeführt, dass dieser einen ersten und einen zweiten Wendeabschnitt aufweist, die bezüglich der vertikalen Richtung zueinander entgegengesetzt angeordnet sind. Der erste und der zweite Wendeabschnitt erstrecken sich insbesondere beidseitig und in entgegengesetzten Richtungen von der Umlaufkontur oder -ebene, die von dem umlaufenden Zugmittel oder den umlaufenden Zugmitteln definiert wird bzw. werden. Derartige Wendehaken sind somit strukturell so ausgebildet, dass diese beim Umlauf um die obere Trocknungsfläche zumindest auf die bezüglich der im Förderbetrieb bewegten Wendehaken jeweils unterhalb gelegene (oberen und unteren) Trocknungsfläche wirken.

Die Wendehaken sind derart mit vertikalem Spiel ausgebildet, dass diese im Förderbetrieb in direktem Kontakt, insbesondere in reibendem Kontakt mit der oberen und/oder unteren Trocknungsfläche stehen können. Mit anderen Worten sind die Wendehaken beispielsweise derart an den vorstehend bereits beschriebenen Trägern befestigt, dass die Wendehaken ein gewissen Freigang in vertikaler Richtung aufweisen. Da die Wendehaken dazu vorgesehen und ausgebildet sind, im Förderbetrieb in schleifendem bzw. reibendem Kontakt über die (oberen und/oder unteren) Trocknungsflächen geführt zu werden, können durch das Spiel Unebenheiten bzw. Fertigungstoleranzen, insbesondere hinsichtlich der Struktur der (oberen und/oder unteren) Trocknungsflächen, wie etwa deren Welligkeit, ausgeglichen werden.

Alternativ oder zusätzlich sind die Wendehaken derart federnd gelagert, dass diese im Förderbetrieb in direktem Kontakt, insbesondere in reibendem Kontakt mit der oberen und/oder unteren Trocknungsfläche stehen können. Die Wendehaken sind hierzu beispielsweise mittels Federelementen, wie etwa Schraub- oder Blattfedern, in vertikaler Richtung vorgespannt, so dass diese in Richtung der oberen und/oder unteren Trocknungsfläche einwirken. Auch durch diese Maßnahme können Unebenheiten bzw. Fertigungstoleranzen, insbesondere hinsichtlich der Struktur der (oberen und/oder unteren) Trocknungsflächen, wie etwa deren Welligkeit, ausgeglichen werden.

In Ausgestaltungen ist das zumindest eine Zugmittel ein endloses Zugmittel, insbesondere ein umlaufendes Seil, ein umlaufendes Band, ein umlaufender Gurt oder eine umlaufende Kette. Die Zugmittel sind vorzugsweise von gängigen Antrieben, wie etwa Elektromotoren angetrieben.

In Ausgestaltungen ist die Länge der oberen Trocknungsfläche, also die Ausdehnung der oberen Trocknungsfläche längs bzw. parallel zur Förderrichtung, kleiner als die Ausdehnung der unteren Trocknungsfläche. Auf diese Weise kann in besonders einfacher Art und Weise sichergestellt werden, dass das zu trocknende Material, insbesondere die zu trocknende Biomasse, im Förderbetrieb von der oberen Trocknungsfläche auf die untere Trocknungsfläche gelangt.

In vorteilhaften Ausgestaltungen sind die Förderelemente mit Hilfe der Vorrichtung zumindest über die gesamte Länge der oberen Trocknungsfläche bewegbar.

In Ausgestaltungen ist die obere und/oder die untere Trocknungsfläche mittels einer Heizeinrichtung zumindest abschnittsweise, vorzugsweise vollständig beheizbar. Die Heizeinrichtung ist beispielsweise ähnlich einer Fußbodenheizung ausgebildet und kann in vorteilhaften Ausführungen zumindest zum Teil, insbesondere vollständig in der jeweiligen (oberen und/oder unteren) Trocknungsfläche integriert sein.

In Ausgestaltungen ist zumindest eine Zerkleinerungseinrichtung zum Zerkleinern des über die Trocknungsflächen geförderten Materials an zumindest einer der Trocknungsflächen angeordnet, insbesondere endseitig. Vorzugsweise ist zumindest eine Zerkleinerungseinrichtung eingangsseitig zum Zerkleinern des feuchten, noch zu trocknenden Materials sowie zumindest eine weitere Zerkleinerungseinrichtung ausgangsseitig zum Zerkleinern des getrockneten Materials vorgesehen. Die Zerkleinerungseinrichtungen sind beispielsweise als Fräsen, Schredder, Häcksler, Schneidrechen oder dergleichen ausgebildet.

Eine Kompaktanlage zum Trocken von Material, insbesondere zum Trocknen von Hackschnitzeln, Metallspänen oder von Biomasse, wie etwa Klärschlamm, Milchschlamm, Biertreber, Gärresten, Gülle, Tiergülle, Biogasgülle oder dergleichen, umfasst zumindest zwei der vorstehend beschriebenen erfindungsgemäßen Vorrichtungen, bevorzugt zumindest drei der vorstehend beschriebenen erfindungsgemäßen Vorrichtungen, besonderes bevorzugt vier der vorstehend beschriebenen erfindungsgemäßen Vorrichtungen. Die Vorrichtungen sind in vertikaler Richtung übereinander angeordnet. Die Kompaktanlage mit den auf mehreren Ebenen angeordneten Vorrichtungen ermöglicht entsprechend eine Trocknung des mit Hilfe der Vorrichtungen geförderten Materials auf mehreren Trocknungsflächen bzw. -ebenen, die zueinander in vertikaler Richtung beabstandet angeordnet sind. Dies ermöglicht den Einsatz der Kompaktanlage in Gebäudeeinheiten, die deutlich kleiner sind als die hallenartig ausgeführten Gebäudeanlagen, die gemäß den bekannten Vorgehensweisen typischerweise zum Trocknen von Biomasse, insbesondere von Klärschlamm, eingesetzt werden. Auf diese Weise wird insbesondere ermöglicht, die Kompaktanlage bereits werkseitig in einer Gebäudeeinheit zu integrieren, um diese dann anschließend an den Endkunden als Einheit auszuliefern. Die einzelnen Trocknungsflächen der Kompaktanlage können insbesondere in horizontalen Ebenen angeordnet sein, um den in vertikaler Richtung zu Verfügung stehenden Bauraum effizient ausnutzen zu können.

In Ausgestaltungen umfasst die Kompaktanlage einen Höhenförderer zum Fördern von zu trocknendem Material, insbesondere Biomasse, auf die obere Trocknungsfläche der obersten Vorrichtung. Von der oberen Trocknungsfläche der obersten Vorrichtung kann das zu trocknende Material, insbesondere die zu trocknende Biomasse, auf besonders einfache Weise im Förderbetrieb auf die unterhalb liegenden Trocknungsebenen gefördert werden. Der Höhenförderer ist in Ausgestaltungen insbesondere dazu ausgebildet, Biomasse in Form von Nassschlamm zu fördern. Hierzu geeignete Höhenförderer sind beispielsweise als Bandförderanlagen, Trogketten-, Stetig- oder Gurtförderer ausgebildet. In vorteilhaften Ausführungen umfasst der Höhenförderer zumindest ein Förderband.

In Ausgestaltungen sind die oberen und unteren Trocknungsflächen der übereinander angeordneten Vorrichtungen derart überlagernd angeordnet, dass diese sich zumindest zum Großteil, insbesondere zu mehr als 80% überlagern, um eine bessere Raumnutzung sicherzustellen. Die überlagernde Anordnung soll insbesondere bezüglich des Flächenbedarfs der jeweiligen Trocknungsfläche hinsichtlich einer senkrechten Projektion auf eine horizontale Ebene verstanden werden.

In Ausgestaltungen sind die Vorrichtungen zum Trocken, insbesondere die Vorrichtungen zum Trocknen von Biomasse, in einer Gebäudeeinheit installiert, deren Länge längs zur Förderrichtung weniger als 30 Meter, bevorzugt weniger als 20 Meter, besonders bevorzugt in etwa 15 Meter und/oder deren Breite quer zur Förderrichtung weniger als 5 Meter, bevorzugt weniger als 3 Meter, besonders bevorzugt in etwa 2,5 Meter und/oder deren Höhe weniger als 10 Meter, bevorzugt weniger als 8 Meter, besonders bevorzugt in etwa 6 Meter beträgt.

In Ausgestaltungen bilden die Trocknungsflächen der in der Kompaktanlage installierten Vorrichtungen eine Trocknungsstrecke für das Material, insbesondere für die Feuchtigkeit enthaltende Biomasse. Vorzugsweise ist zumindest eine Zerkleinerungseinrichtung an der Trocknungsstrecke eingangsseitig zum Zerkleinern des feuchten, noch zu trocknenden Materials und/oder zumindest eine Zerkleinerungseinrichtung an der Trocknungsstrecke ausgangsseitig zum Zerkleinern des getrockneten Materials vorgesehen. Die Zerkleinerungseinrichtungen sind beispielsweise als Fräsen, Schredder, Häcksler, Schneidrechen oder dergleichen ausgebildet.

Das nachfolgend beschriebene Verfahren ist nicht erfindungsgemäß und dient lediglich der Veranschaulichung. Beschrieben wird ferner ein Verfahren zum Trocknen von Material, insbesondere zum Trocknen von Biomasse, wobei das Material mittels Förderelementen über zumindest zwei Trocknungsflächen, die in vertikaler Richtung voneinander beabstandet sind und sich zumindest abschnittsweise überlagern, kaskadenähnlich verteilt wird, um das Material zum Trocknen auf den zumindest zwei Trocknungsflächen flächig auszubringen. Es ist somit zumindest eine obere Trocknungsfläche und zumindest eine untere Trocknungsfläche vorgesehen, die sich zumindest abschnittsweise derart überlappen, dass Material mit Hilfe der Förderelemente von der zumindest einen oberen Trocknungsfläche auf die zumindest eine untere Trocknungsfläche gefördert werden kann. Die Trocknung des Materials erfolgt auf mehreren Ebenen, wobei die Trocknungsflächen vorzugsweise beheizt werden.

Vorzugsweise wird das Material von der zumindest einen oberen Trocknungsfläche auf die zumindest eine untere Trocknungsfläche unter Einfluss der Schwerkraft gefördert. Beispielsweise ist zumindest ein Abschnitt der zumindest einen unteren Trocknungsfläche derart unterhalb des Endes der oberen Trocknungsfläche angeordnet, dass das mittels der Förderelemente über die zumindest eine obere Trocknungsfläche geförderte Material auf den darunter liegenden Abschnitt der zumindest einen unteren Trocknungsfläche fällt. Auf diese Weise wird das Material kaskadenähnlich über die Trocknungsflächen verteilt. Vorzugsweise sind mehrere Trocknungsflächen, also insbesondere mehr als zwei Trocknungsflächen, wie vorstehend beschrieben übereinander angeordnet, so dass das Material zum Trocknen auf besonders einfache Art und Weise über eine Vielzahl von Trocknungsflächen gleichmäßig verteilt werden kann.

Das vorstehend beschriebene Verfahren erfolgt insbesondere unter Verwendung zumindest einer der vorstehend bereits beschriebenen Vorrichtungen zum Trocknen. Vorzugsweise werden Förderelemente zum Ausbringen des Materials von zumindest einem um die zumindest eine obere Trocknungsfläche umlaufenden Zugmittel bewegt. Die Förderelemente wirken zum Verteilen des Materials auf die zumindest eine obere Trocknungsfläche und die zumindest eine untere Trocknungsfläche ein.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert. Es zeigen
- FIG. 1: eine Kompaktanlage mit zwei übereinander angeordneten Vorrichtungen zum Trocken von Material, insbesondere von Biomasse in einer Querschnittsdarstellung;
- FIG. 2: ein Wendehaken für die in Fig. 1 dargestellte Vorrichtungen zum Trocken von Material, insbesondere von Biomasse in einer Querschnittsdarstellung;
- FIG. 3: den Wendehaken der FIG.2 in einer weiteren Schnittdarstellung;
- FIG. 4: den Wendehaken der FIG.2 in einer perspektivischen Darstellung;
- FIG. 5: eine Gebäudeeinheit, in der die Kompaktanlage der FIG. 1 installiert ist, in einer perspektivischen Außenansicht.

Einander entsprechende Teile und Komponenten sind in allen Figuren mit den gleichen Bezugszeichen versehen.

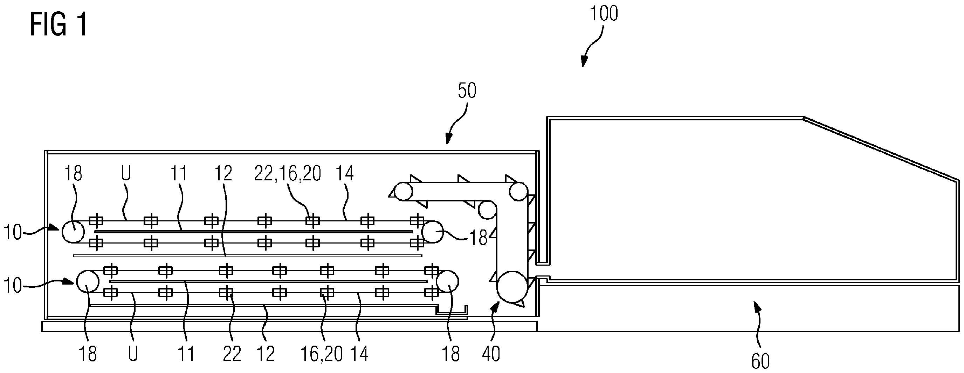

FIG 1 zeigt eine Gebäudeeinheit 100, in der eine Kompaktanlage 50 installiert ist, die zwei übereinander angeordnete Vorrichtungen 10 zum Trocken von Material, insbesondere zum Trockenen von Biomasse, wie etwa Klärschlamm, und einen Höhenförderer 40 umfasst. Die nachfolgende Beschreibung nimmt explizit Bezug auf die Trocknung von Biomasse. Es versteht sich, dass die Vorrichtung 10 bzw. die Kompaktanlage 50 nicht auf die Trocknung von Biomasse beschränkt ist. Die Vorrichtung 10 bzw. die Kompaktanlage 50 ist beispielsweise gleichermaßen dazu geeignet, anorganisches Material, wie etwa Metallspäne, oder Schüttgut, wie etwa Hackschnitzel oder dergleichen, zu trocknen.

Jede Vorrichtung 10 weist eine oberen Trocknungsfläche 11 und eine untere Trocknungsfläche 12 auf, die in vertikaler Richtung voneinander beabstandet sind. Die oberen und unteren Trocknungsflächen 11, 12 sind im dargestellten Ausführungsbeispiel als beheizbare Platten beispielsweise aus Edelstahl ausgebildet. Auf die Trocknungsflächen 11, 12 ist Biomasse zum Trocknen flächig ausbringbar, die der Höhenförderer 40 im Betrieb von einem Lager 60 auf die obere Trocknungsfläche der oberen Vorrichtung 10 fördert. Die Vorrichtungen 10 sind dazu ausgebildet, die geförderte Biomasse auf den Trocknungsflächen 11, 12 zu verteilen und gegebenenfalls zu durchmischen. Hierzu weist jede Vorrichtung 10 umlaufende Zugmittel 14, beispielsweise eine umlaufende Kette oder ein umlaufendes Seil, auf, an denen die Förderelemente 16 mittelbar befestigt sind.

Die endlosen Zugmittel 14 sind umlaufend um die obere Trocknungsfläche 11 der jeweiligen Vorrichtung 10 angeordnet und können von motorisch angetriebenen Antriebsmittel 18, beispielsweise von motorisch angetriebenen Rollen oder Walzen, in eine umlaufende Bewegung versetzt werden.

Während des Förderbetriebs der Vorrichtungen 10 bewegen sich die Zugmittel 14 entlang einer geschlossenen Trajektorie, die eine Umlaufebene U bzw. Umlaufkontur beschreibt, die im Querschnitt in FIG. 1 dargestellt ist. Da die Zugmittel 14 einer jeden Vorrichtung 10 umlaufend um die jeweilige obere Trocknungsfläche 11 (auch: Trocknungsebene) angeordnet sind, kann mit Hilfe der daran mittelbar befestigten Förderelementen 16 Biomasse sowohl über die obere Trocknungsfläche 11 als auch über die untere Trocknungsfläche 12 gefördert werden. Die Förderelemente 16 sind strukturell derart ausgebildet und ausgerichtet, dass diese bei der umlaufenden Bewegung entlang der Umlaufebene U in Richtung der oberen und/oder der unteren Trocknungsfläche 11, 12 wirken. Hierzu können die Förderelemente 16 beispielsweise eine zum Fördern von Biomasse geeignete Struktur aufweisen, die sich beidseitig von der Umlaufebene U in entgegengesetzten Richtungen erstreckt.

In anderen Fällen können beispielsweise Förderelemente 16 vorgesehen sein, die eine zum Fördern von Biomasse geeignete Struktur aufweisen, die sich lediglich einseitig von der Umlaufebene U erstreckt. Derartige, in lediglich eine Richtung wirkende Förderelemente 16 sind entsprechend in unterschiedlichen Orientierungen bezüglich der vertikalen Richtung an den Zugmitteln 14 mittelbar befestigt, damit mit Hilfe der jeweiligen Vorrichtung 10 Biomasse sowohl über die obere Trocknungsfläche 11 als auch über die untere Trocknungsfläche 12 verteilt werden kann. Vorzugsweise sind derartige Förderelemente 16 hinsichtlich ihrer Orientierung alternierend entlang der Umlaufebene U angeordnet.

Die obere Trocknungsfläche 11 hat längs der Zugmittel 14 (parallel zu Förderrichtung) eine geringfügig kleinere Ausdehnung als die untere Trocknungsfläche 12. Die beiden übereinander angeordneten Vorrichtungen 10 sind geringfügig zueinander versetzt angeordnet. Auf diese Weise wird sichergestellt, dass die vom Höhenförderer 40 geförderte Biomasse mit Hilfe der Vorrichtungen 10 großflächig über die oberen und unteren Trocknungsflächen 11, 12 verteilt werden kann.

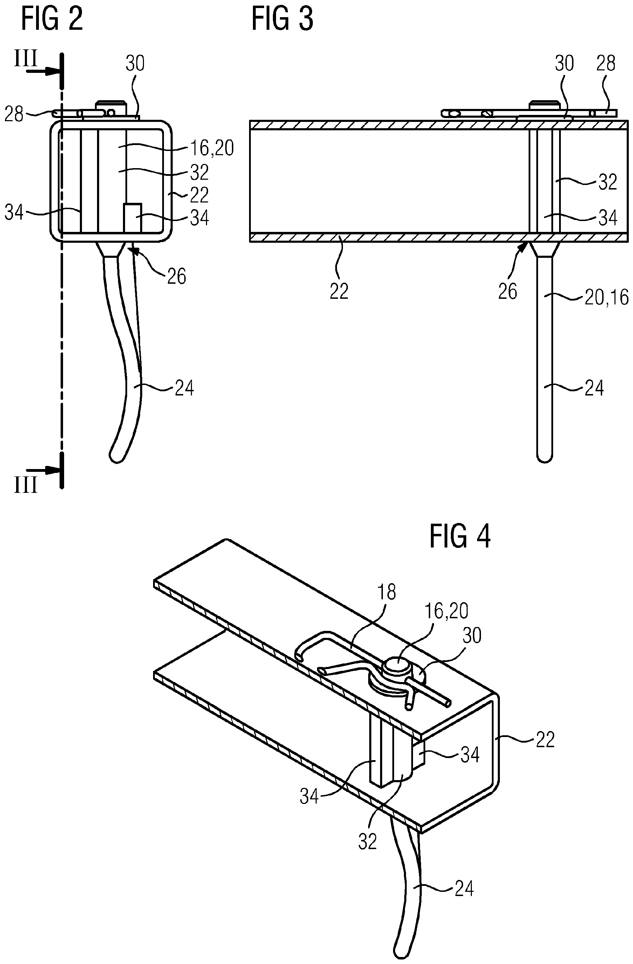

Mögliche Ausgestaltungen der Förderelemente 16 sind in FIG. 2 bis 4 dargestellt. Die Förderelemente 16 sind als Wendehaken 20 ausgeführt, die von Trägern 22 getragen werden, welche an den Zugmitteln 14 befestigt sind. Jeder Träger 22 erstreckt sich quer zur Förderrichtung und trägt mehrere Wendehaken 20, die bezüglich der Umlaufebene U alternierend (vgl. FIG. 1), also insbesondere abwechselnd nach oben und nach unten, ausgerichtet sind.

Der Wendehaken 20 umfasst einen gekrümmten Wendeabschnitt 24 zum Fördern von Biomasse über die Trocknungsflächen 11, 12. Der Wendeabschnitt 24 ist dazu ausgebildet, endseitig auf den Trocknungsflächen 11, 12 aufzuliegen und während des Förderbetriebs schleifend über die Trocknungsflächen 11, 12 geführt zu werden. Um einen kontinuierlichen reibenden Kontakt der Wendehaken 20 mit den Trocknungsflächen 11, 12 sicherzustellen, sind diese am Träger 22 mit vertikalem Spiel befestigt, d. h. die Wendehaken 20 haben einen gewissen Freigang in vertikaler Richtung, damit bei der Förderbewegung insbesondere Unebenheiten der Trocknungsflächen 11, 12 ausgeglichen werden können.

Alternativ oder zusätzlich sind die Wendehaken 20 in vertikaler Richtung mittels nicht näher dargestellten Federelementen in Richtung der Trocknungsflächen 11, vorgespannt, um einen weitgehend schleifenden Kontakt zwischen den Wendehaken 20 und den Trocknungsflächen 11, 12 während des Förderbetriebs sicherzustellen.

Um einem Verschleiß der Wendehaken 20 entgegen zu wirken, sind diese vorzugsweise zumindest abschnittsweise aus verschleißfestem Material wie etwa Edelstahl gebildet. Alternativ oder zusätzlich weisen die Wendehaken 20 zumindest endseitig einen Überzug aus verschleißfestem Material auf. Dieser Überzug kann beispielsweise ein Edelstahlüberzug sein, der zumindest den endseitigen Bereich des Wendehakens 20 überdeckt, der beim bestimmungsgemäßen Gebrauch der Vorrichtung in Kontakt zum geförderten Material und/oder in schleifendem Kontakt zu den Trocknungsflächen 11, 12 steht.

Die Anzahl, der Abstand und die Form der Wendehaken 20 kann insbesondere auf das zu trocknende Material angepasst werden. Die Vorrichtung 10 ist diesbezüglich flexibel ausgestaltet und kann modifiziert werden, um für eine Vielzahl von unterschiedlichen Trocknungsanwendungen eingesetzt werden zu können.

In einem alternativen Ausführungsbeispiel sind die Wendehaken in nicht dargestellter Art und Weise als Doppelhaken ausgeführt und umfassen erste und zweite Wendeabschnitte, die gekrümmt sind, und vom Träger 22 in entgegengesetzten Richtungen hervorstehen.

Wie insbesondere in FIG. 2 bis 4 dargestellt, sind die Wendehaken 20 in einer Ausnehmung 26 des Trägers 22 formschlüssig eingesetzt und endseitig mittels eines Splintes 28 und einer Unterlegscheibe 30 gesichert. Auf diese Weise wird sichergestellt, dass der am Träger 22 befestigte Wendehaken 20 einen Freigang in vertikaler Richtung aufweist und zudem schnell und einfach ausgetauscht werden kann. Beispielsweise kann es sich somit bei dem Träger 22 mit den Wendehaken 20 um einen Mitnehmerrechen mit schnellwechselbaren Zinken als Wendehaken handeln.

Der Träger 22 ist als Hohlprofil ausgeführt. Die Formgebung der Ausnehmung 26 ist komplementär zu der Querschnittsgestalt des eingesetzten Wendehakens 22, der in diesem Bereich einen nicht-rotationssymmetrischen Querschnitt aufweist. Der Wendehaken 20 ist somit am Träger 22 drehfest befestigt. In dem dargestellten Ausführungsbeispiel weist der Wendehaken 22 im Bereich der Ausnehmung 26 einen runden Kern 32 auf, von dem diametral zwei Rippen 34 abstehen. Wie insbesondere in FIG. 2 oder 4 dargestellt, weist eine der Rippen 34 eine etwas kürzere Ausdehnung auf als die andere.

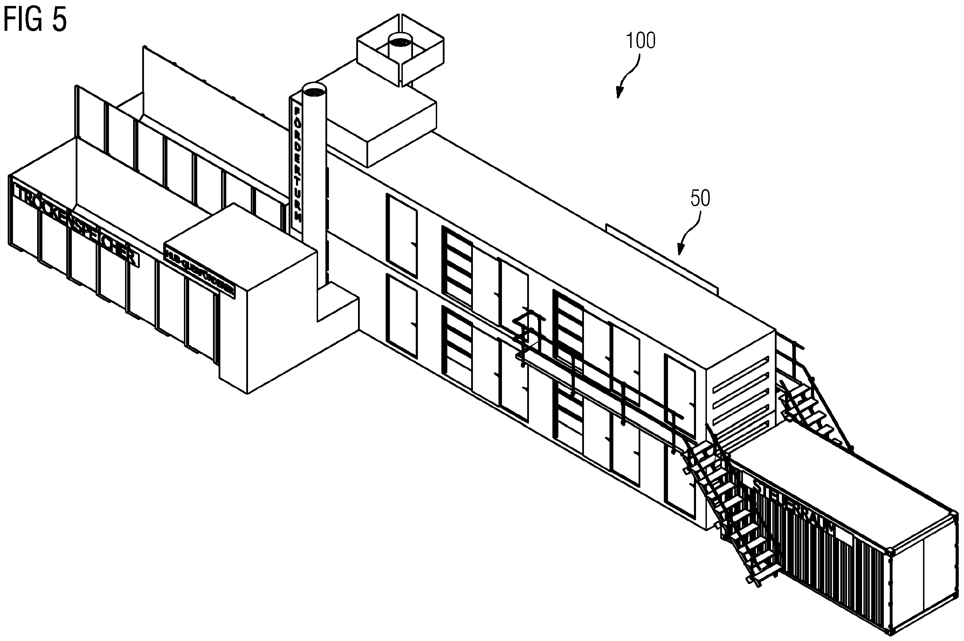

FIG. 5 zeigt die Gebäudeeinheit 100, in der die Kompaktanlage 50 der FIG. 1 installiert ist, in einer Außenansicht. Eine derartige Gebäudeeinheit 100 kann modular aufgebaut sein und mehrere übereinander angeordnete Vorrichtungen 10 enthalten. In einem möglichen Ausführungsbeispiel sind vier übereinander angeordnete Vorrichtungen 10 vorgesehen, so dass der Trocknungsprozess auf insgesamt acht Trocknungsflächen 11, 12 bzw. -ebenen erfolgt. Die Kompaktanlage 50 zeichnet sich durch einen reduzierten Bauraumbedarf aus und kann in einer Gebäudeeinheit 100 installiert werden, deren Länge längs zur Förderrichtung weniger als 30 Meter, bevorzugt weniger als 20 Meter, besonders bevorzugt in etwa 15 Meter und deren Breite quer zur Förderrichtung weniger als 5 Meter, bevorzugt weniger als 3 Meter, besonders bevorzugt in etwa 2,5 Meter und deren Höhe weniger als 10 Meter, bevorzugt weniger als 8 Meter, besonders bevorzugt in etwa 6 Meter beträgt. Durch den geringen Bauraumbedarf der Kompaktanlage 50 kann diese bereits werkseitig in einer geeigneten Gebäudeeinheit 100 installiert werden, die dann als im Wesentlichen bereits endmontierte Gesamtanlage an einen Kunden ausgeliefert werden kann.

Die Trocknungsflächen 11, 12 der Kompaktanlage 50 bilden eine Trocknungsstrecke für das zu trocknende Material. Vorzugsweise ist in nicht näher dargestellter Weise eine Zerkleinerungseinrichtung, beispielsweise ein Häcksler, am Eingang der Trocknungsstrecke, beispielsweise im Bereich des Höhenförderers 40 oder vor dem Höhenförderer 40, zum Zerkleinern des zugeführten, feuchten Materials angeordnet. Alternativ oder zusätzlich ist eine Zerkleinerungseinrichtung, beispielsweise ein Schneidrechen, zum Zerkleinern des getrockneten Materials ausgangsseitig an der Trocknungsstrecke, also am Ende der untersten Trocknungsfläche 12 der Figur 1 angeordnet.

### Bezugszeichenliste

- 10: Vorrichtung
- 11: obere Trocknungsfläche
- 12: untere Trocknungsfläche
- 14: Zugmittel
- 16: Förderelement
- 18: Antriebsmittel
- 20: Wendehaken
- 22: Träger
- 24: Wendeabschnitt
- 26: Ausnehmung
- 28: Splint
- 30: Unterlegscheibe
- 32: Kern
- 34: Rippe
- 40: Höhenförderer
- 50: Kompaktanlage
- 60: Lager
- 100: Gebäudeeinheit
- U: Umlaufebene

## Patentansprüche

1. Vorrichtung (10) zum Trocknen, insbesondere zum Trocknen von Biomasse, mit zumindest einer oberen und einer unteren Trocknungsfläche (11, 12), die in vertikaler Richtung voneinander beabstandet sind, auf die Material, insbesondere Biomasse, zum Trocknen flächig ausbringbar ist, wobei zum Ausbringen des Materials, insbesondere der Biomasse, von zumindest einem Zugmittel (14) bewegbare oder bewegte Förderelemente (16) vorgesehen sind, wobei das zumindest eine Zugmittel (14) umlaufend um die obere Trocknungsfläche (11) angeordnet ist, wobei die Förderelemente (16) als Wendehaken (20) ausgebildet sind, die in einer von dem zumindest einen Zugmittel (14) vorgegebenen Förderrichtung zueinander beabstandet angeordnet sind, wobei die Wendehaken (20) zumindest einen Wendeabschnitt (24) zum Verteilen des Materials, insbesondere der Biomasse, auf den Trocknungsflächen (11, 12) aufweisen, wobei die Wendeabschnitte (24), die zum Verteilen des Materials, insbesondere der Biomasse, auf der oberen Trocknungsfläche (11) vorgesehen sind, bezüglich der vertikalen Richtung und/ oder bezüglich einer Umlaufebene (U) entgegengesetzt zu den Wendeabschnitten (24) angeordnet sind, die zum Verteilen des Materials, insbesondere der Biomasse, auf der unteren Trocknungsfläche (12) vorgesehen sind, wobei der zumindest eine Wendeabschnitt (24) gekrümmt ist, wobei die Wendehaken (20) mittelbar über Träger (22) an dem zumindest einen Zugmittel (14) befestigt sind und von diesem in Förderrichtung bewegbar sind, wobei sich die Träger (22) quer zur Förderrichtung erstrecken und an jedem Träger (22) mehrere Wendehaken (20) befestigt sind, wobei Wendehaken (20), die zumindest einer der Träger (22) trägt, an diesem drehfest befestigt sind, wobei
die Wendehaken (20) derart mit vertikalem Spiel ausgebildet sind oder derart federnd gelagert sind, dass diese im Förderbetrieb in direktem Kontakt, insbesondere in reibendem Kontakt mit der oberen und/oder unteren Trocknungsfläche (11, 12) stehen können.

2. Vorrichtung (10) nach Anspruch 1, wobei in Förderrichtung benachbart angeordnete Wendehaken (20) mit ihren Wendeabschnitten (24) bezüglich der vertikalen Richtung und/oder bezüglich der Umlaufebene (U) jeweils alternierend angeordnet sind.

3. Vorrichtung (10) nach einem der Ansprüche 1 bis 2, wobei zumindest einer der Träger (22) mehrere Wendehaken (20) trägt und quer zur Förderrichtung benachbart angeordnete Wendehaken (20) Wendeabschnitte (24) aufweisen, die bezüglich der vertikalen Richtung und/oder bezüglich der Umlaufebene (U) jeweils alternierend mit angeordnet sind.

4. Vorrichtung (10) nach Anspruch 1, wobei zumindest einer der Träger (22) ein Hohlprofil aufweist.

5. Vorrichtung (10) nach einem der Ansprüche 1 bis 4, wobei zur drehfesten Befestigung der Wendehaken (20) diese mit einer nicht-rotationssymmetrischen Querschnittsfläche versehen sind, die in dazu komplementär ausgebildeten Ausnehmungen (26) im Träger (22) aufgenommen sind.

6. Vorrichtung (10) nach einem der Ansprüche 1 bis 5, wobei zumindest einer der Wendehaken (20) als Doppelhaken dergestalt ausgeführt ist, dass dieser einen ersten und einen zweiten Wendeabschnitt (24) aufweist, die bezüglich der vertikalen Richtung bzw. der Umlaufebene (U) zueinander entgegengesetzt angeordnet sind.

7. Vorrichtung (10) nach einem der vorhergehenden Ansprüche, wobei das zumindest eine Zugmittel (14) ein endloses Zugmittel, insbesondere ein umlaufendes Seil, ein umlaufendes Band, ein umlaufender Gurt oder eine umlaufende Kette, ist.

8. Vorrichtung (10) nach einem der vorhergehenden Ansprüche, wobei die Ausdehnung der oberen Trocknungsfläche (11) parallel zur Förderrichtung kleiner ist als die Ausdehnung der unteren Trocknungsfläche (12).

9. Vorrichtung (10) nach einem der vorhergehenden Ansprüche, wobei die obere und/oder die untere Trocknungsfläche (11, 12) mittels einer Heizeinrichtung zumindest abschnittsweise, vorzugsweise vollständig beheizbar ist.

10. Vorrichtung nach einem der vorhergehenden Ansprüche, wobei zumindest eine Zerkleinerungseinrichtung zum Zerkleinern des Materials an zumindest einer der Trocknungsflächen (11, 12) angeordnet ist.

11. Kompaktanlage (50) zum Trocken, insbesondere zum Trocken von Biomasse, mit zumindest zwei Vorrichtungen (10), bevorzugt zumindest drei Vorrichtungen (10), besonderes bevorzugt vier Vorrichtungen (10) nach einem der vorhergehenden Ansprüche, wobei die Vorrichtungen (10) in vertikaler Richtung übereinander angeordnet sind.

12. Kompaktanlage (50) nach Anspruch 11 mit einem Höhenförderer (40) zum Fördern von Material, insbesondere von Biomasse, auf die obere Trocknungsfläche (11) der obersten Vorrichtung (10), wobei sich die oberen und unteren Trocknungsflächen (11, 12) der übereinander angeordneten Vorrichtungen (10) zumindest zum Großteil, insbesondere zu mehr als 80%, überlagern, und wobei die Trocknungsflächen (11, 12) der Vorrichtungen (10) eine Trocknungsstrecke für das Material bilden und eingangsseitig und/oder ausgangsseitig an der Trocknungsstrecke zumindest eine Zerkleinerungseinrichtung zum Zerkleinern des zu trocknenden und/oder getrockneten Materials angeordnet ist..

13. Kompaktanlage (50) nach einem der Ansprüche 11 bis 12, wobei die Vorrichtungen (10) zum Trocken in einer Gebäudeeinheit (100) installiert sind, deren Länge längs zur Förderrichtung weniger als 30 Meter, bevorzugt weniger als 20 Meter, besonders bevorzugt in etwa 15 Meter und/oder deren Breite quer zur Förderrichtung weniger als 5 Meter, bevorzugt weniger als 3 Meter, besonders bevorzugt in etwa 2,5 Meter und/oder deren Höhe weniger als 10 Meter, bevorzugt weniger als 8 Meter, besonders bevorzugt in etwa 6 Meter beträgt.

## Claims

1. Drying device (10), in particular for drying biomass, having at least one upper and one lower drying surface (11, 12) which are spaced apart from one another in the vertical direction and onto which material, in particular biomass, can be spread over a surface for drying, wherein conveyor elements (16) which can be moved or are moved by at least one pulling means (14) are provided for spreading the material, in particular the biomass, wherein the at least one pulling means (14) is arranged to circulate around the upper drying surface (11), wherein the conveyor elements (16) are designed as turning hooks (20) which are spaced apart from one another in a conveying direction which is predetermined by the at least one pulling means (14), wherein the turning hooks (20) have at least one turning portion (24) for distributing the material, in particular the biomass, on the drying surfaces (11, 12), wherein the turning portions (24) which are provided for distributing the material, in particular the biomass, on the upper drying surface (11) are arranged, with respect to the vertical direction and/or with respect to a circumferential plane (U), opposite the turning portions (24) which are provided for distributing the material, in particular the biomass, on the lower drying surface (12), wherein the at least one turning portion (24) is curved, wherein the turning hooks (20) are attached indirectly via supports (22) to the at least one pulling means (14) and can be moved by this pulling means in the conveying direction, wherein the supports (22) extend transversely to the conveying direction and a plurality of turning hooks (20) are attached to each support (22), wherein turning hooks (20), which at least one of the supports (22) supports, are non-rotatably attached to this support, wherein
the turning hooks (20) are designed having vertical play or are spring-mounted in such a way that they can be in direct contact, in particular in frictional contact, with the upper and/or lower drying surface (11, 12) during conveying operation.

2. Device (10) according to claim 1, wherein turning hooks (20) which are arranged adjacently in the conveying direction are each arranged alternately with their turning portions (24) with respect to the vertical direction and/or with respect to the circulating plane (U).

3. Device (10) according to either claim 1 or claim 2, wherein at least one of the supports (22) supports a plurality of turning hooks (20) and turning hooks (20) which are arranged adjacently transversely to the conveying direction have turning portions (24) which are each arranged alternately with with respect to the vertical direction and/or with respect to the circulating plane (U).

4. Device (10) according to claim 1, wherein at least one of the supports (22) has a hollow profile.

5. Device (10) according to any of claims 1 to 4, wherein for the non-rotatable attachment of the turning hooks (20), these are provided with a non-rotationally symmetrical cross-sectional area and are received in recesses (26) in the support (22), which are designed to be complementary to this cross-sectional area.

6. Device (10) according to any of claims 1 to 5, wherein at least one of the turning hooks (20) is designed as a double hook such that it has a first turning portion and a second turning portion (24) which are arranged opposite one another with respect to the vertical direction or the circulating plane (U).

7. Device (10) according to any of the preceding claims, wherein the at least one pulling means (14) is an endless pulling means, in particular a circulating rope, a circulating band, a circulating belt or a circulating chain.

8. Device (10) according to any of the preceding claims, wherein the extent of the upper drying surface (11) in parallel with the conveying direction is smaller than the extent of the lower drying surface (12).

9. Device (10) according to any of the preceding claims, wherein the upper and/or the lower drying surface (11, 12) can be heated, at least in portions, preferably completely, by means of a heating apparatus.

10. Device according to any of the preceding claims, wherein at least one grinding apparatus for grinding the material is arranged on at least one of the drying surfaces (11, 12).

11. Compact drying system (50), in particular for drying biomass, having at least two devices (10), preferably at least three devices (10), particularly preferably four devices (10), according to any of the preceding claims, wherein the devices (10) are arranged one above the other in the vertical direction.

12. Compact system (50) according to claim 11, having a height conveyor (40) for conveying material, in particular biomass, to the upper drying surface (11) of the uppermost device (10), wherein the upper and lower drying surfaces (11, 12) of the devices (10) arranged one above the other overlap at least by a large extent, in particular by more than 80%, and wherein the drying surfaces (11, 12) of the devices (10) form a drying section for the material and at least one grinding apparatus for grinding the material to be dried and/or dried material is arranged on the inlet side and/or outlet side of the drying section.

13. Compact system (50) according to either claim 11 or claim 12, wherein the drying devices (10) are installed in a building unit (100), of which the length in the conveying direction is less than 30 meters, preferably less than 20 meters, particularly preferably approximately 15 meters and/or of which the width transversely to the conveying direction is less than 5 meters, preferably less than 3 meters, particularly preferably approximately 2.5 meters and/or of which the height is less than 10 meters, preferably less than 8 meters, particularly preferably approximately 6 meters.

## Revendications

1. Dispositif (10) pour le séchage, en particulier pour le séchage de biomasse, comportant au moins une surface de séchage supérieure et une surface de séchage inférieure (11, 12) qui sont espacées l'une de l'autre dans la direction verticale et sur lesquelles de la matière, en particulier de la biomasse, peut être distribuée à plat pour le séchage, dans lequel, pour la distribution de la matière, en particulier de la biomasse, des éléments de transport (16) déplaçables ou déplacés par au moins un moyen de traction (14) sont prévus, dans lequel l'au moins un moyen de traction (14) est disposé de manière circulaire autour de la surface de séchage supérieure (11), dans lequel les éléments de transport (16) sont réalisés sous forme de crochets de retournement (20) qui sont disposés de manière à être espacés les uns des autres dans un sens de transport prédéfini par l'au moins un moyen de traction (14), dans lequel les crochets de retournement (20) présentent au moins une section de retournement (24) pour la répartition de la matière, en particulier de la biomasse, sur les surfaces de séchage (11, 12), dans lequel les sections de retournement (24) prévues pour la répartition de la matière, en particulier de la biomasse, sur la surface de séchage supérieure (11) sont disposées, par rapport à la direction verticale et/ou par rapport à un plan de circulation (U), à l'opposé des sections de retournement (24) prévues pour la répartition de la matière, en particulier de la biomasse, sur la surface de séchage inférieure (12), dans lequel l'au moins une section de retournement (24) est incurvée, dans lequel les crochets de retournement (20) sont fixés indirectement par l'intermédiaire de supports (22) à l'au moins un moyen de traction (14) et peuvent être déplacés par celui-ci dans le sens de transport, dans lequel les supports (22) s'étendent transversalement au sens de transport et plusieurs crochets de retournement (20) sont fixés à chaque support (22), dans lequel des crochets de retournement (20) qu'au moins l'un des supports (22) porte sont fixés à celui-ci de manière solidaire en rotation, dans lequel
les crochets de retournement (20) sont réalisés avec un jeu vertical ou sont montés de manière élastique de telle sorte que ceux-ci peuvent être en contact direct, en particulier en contact par frottement, avec la surface de séchage supérieure et/ou inférieure (11, 12) dans le mode de transport.

2. Dispositif (10) selon la revendication 1, dans lequel des crochets de retournement (20) disposés de manière adjacente dans le sens de transport sont disposés avec leurs sections de retournement (24) respectivement en alternance par rapport à la direction verticale et/ou par rapport au plan de circulation (U).

3. Dispositif (10) selon l'une des revendications 1 à 2, dans lequel au moins l'un des supports (22) porte plusieurs crochets de retournement (20) et des crochets de retournement (20) disposés de manière adjacente transversalement au sens de transport présentent des sections de retournement (24) qui sont disposées respectivement en alternance avec par rapport à la direction verticale et/ou par rapport au plan de circulation (U).

4. Dispositif (10) selon la revendication 1, dans lequel au moins l'un des supports (22) présente un profilé creux.

5. Dispositif (10) selon l'une des revendications 1 à 4, dans lequel, pour la fixation de manière solidaire en rotation des crochets de retournement (20), ceux-ci sont pourvus d'une surface de section transversale non symétrique en rotation, lesquelles surfaces sont reçues dans des évidements (26) réalisés de manière complémentaire dans le support (22).

6. Dispositif (10) selon l'une des revendications 1 à 5, dans lequel au moins l'un des crochets de retournement (20) est conçu sous la forme d'un crochet double, de telle sorte que celui-ci présente une première et une seconde section de retournement (24) qui sont disposées de manière opposée l'une à l'autre par rapport à la direction verticale ou au plan de circulation (U).

7. Dispositif (10) selon l'une des revendications précédentes, dans lequel l'au moins un moyen de traction (14) est un moyen de traction sans fin, en particulier un câble circulaire, une bande circulaire, une sangle circulaire ou une chaîne circulaire.

8. Dispositif (10) selon l'une des revendications précédentes, dans lequel l'étendue de la surface de séchage supérieure (11) parallèlement au sens de transport est inférieure à l'étendue de la surface de séchage inférieure (12).

9. Dispositif (10) selon l'une des revendications précédentes, dans lequel la surface de séchage supérieure et/ou la surface de séchage inférieure (11, 12) peuvent être chauffées au moins dans certaines sections, de préférence entièrement, au moyen d'un appareil de chauffage.

10. Dispositif selon l'une des revendications précédentes, dans lequel au moins un appareil de broyage permettant de broyer la matière est disposé sur au moins l'une des surfaces de séchage (11, 12).

11. Installation compacte (50) pour le séchage, en particulier pour le séchage de biomasse, comportant au moins deux dispositifs (10), de préférence au moins trois dispositifs (10), de manière particulièrement préférée quatre dispositifs (10) selon l'une des revendications précédentes, dans laquelle les dispositifs (10) sont disposés les uns au-dessus des autres dans la direction verticale.

12. Installation compacte (50) selon la revendication 11, comportant un transporteur en hauteur (40) pour le transport de matière, en particulier de biomasse, sur la surface de séchage supérieure (11) du dispositif (10) le plus haut, dans laquelle les surfaces de séchage supérieure et inférieure (11, 12) des dispositifs (10) disposés les uns au-dessus des autres se chevauchent au moins en grande partie, en particulier à plus de 80 %, et dans laquelle les surfaces de séchage (11, 12) des dispositifs (10) forment une voie de séchage pour la matière et au moins un appareil de broyage permettant de broyer la matière à sécher et/ou séchée est disposé côté entrée et/ou côté sortie sur la voie de séchage.

13. Installation compacte (50) selon l'une des revendications 11 à 12, dans laquelle les dispositifs (10) sont installés pour le séchage dans une unité formant bâtiment (100) dont la longueur longitudinalement par rapport au sens de transport est inférieure à 30 mètres, de préférence inférieure à 20 mètres, de manière particulièrement préférée est d'environ 15 mètres, et/ou dont la largeur transversalement par rapport au sens de transport est inférieure à 5 mètres, de préférence inférieure à 3 mètres, de manière particulièrement préférée est d'environ 2,5 mètres, et/ou dont la hauteur est inférieure à 10 mètres, de préférence inférieure à 8 mètres, de manière particulièrement préférée est d'environ 6 mètres.
